(19) Europäisches Patentamt
European Patent Office
Office européen des brevets

(11) **EP 4 772 873 A2**

(12) **DEMANDE DE BREVET EUROPEEN**

(43) Date de publication:
**08.07.2026 Bulletin 2026/28**

(21) Numéro de dépôt: **25223921.5**

(22) Date de dépôt: **16.12.2025**

(51) Classification Internationale des Brevets (IPC):
**G01N 29/04** *(2006.01)*   **G01N 29/30** *(2006.01)*
**G01N 29/44** *(2006.01)*

(52) Classification Coopérative des Brevets (CPC):
**G01N 29/043; G01N 29/30;** G01N 29/4472

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité:  **17.12.2024  FR 2414380**

(71) Demandeur: **Aubert & Duval
92130 Issy-Les-Moulineaux (FR)**

(72) Inventeurs:
• **BANCHET, Julien
92130 Issy-les-Moulineaux (FR)**
• **BOBOT, Frédéric
92130 Issy-les-Moulineaux (FR)**
• **MATHIEU, William
92130 Issy-les-Moulineaux (FR)**
• **PICQUE, Benjamin
92130 Issy-les-Moulineaux (FR)**

(74) Mandataire: **Lavoix
2, place d'Estienne d'Orves
75441 Paris Cedex 09 (FR)**

(54) **PROCÉDÉ ET ENSEMBLE DE CONTRÔLE PAR ULTRASONS D'UNE PIÈCE INDUSTRIELLE**

(57)   Le procédé comprend :
- une étape (S10) de génération d'un référentiel prévoyant une pluralité d'opérations de contrôle par ultrasons définies par des paramètres de contrôle;
- une étape (S20) d'établissement d'un programme de contrôle par ultrasons définissant pour chaque opération de contrôle par ultrasons des paramètres opératoires;
- une étape (S30) de contrôle par ultrasons de la pièce industrielle (10), avec enregistrement de données caractérisant les contrôles par ultrasons effectivement mis en œuvre;

- une étape (S40) de vérification de la conformité du contrôle par ultrasons avec :
* une sous-étape (S41) de vérification de la conformité du programme de contrôle par ultrasons vis-à-vis du référentiel, en utilisant les paramètres de contrôle et les paramètres opératoires ;
* une sous-étape (S42) de vérification de la conformité du contrôle par ultrasons vis-à-vis du référentiel, en utilisant les paramètres de contrôle et les paramètres effectifs.

<u>FIG.1</u>

EP 4 772 873 A2

**Description**

La présente invention concerne en général un procédé de contrôle par ultrasons d'une pièce industrielle.

Les pièces industrielles peuvent être contrôlées par ultrasons de manière à vérifier qu'elles ne comportent pas de défaut à l'intérieur de la matière.

Ces pièces présentent dans certains cas des formes complexes.

Le procédé de contrôle comprend typiquement une étape d'établissement d'un plan de contrôle par ultrasons de la pièce industrielle, et une étape de contrôle par ultrasons de la pièce industrielle selon le plan de contrôle préalablement établi.

L'étape de contrôle par ultrasons est réalisée avec le plus grand soin possible, mais des erreurs d'application du plan de contrôle peuvent survenir.

Dans ce contexte, l'invention vise à proposer un procédé de contrôle par ultrasons qui permet de garantir une meilleure fiabilité pour le contrôle des pièces industrielles.

A cette fin, l'invention selon un premier aspect porte sur un procédé de contrôle par ultrasons d'une pièce industrielle, le procédé comprenant :

-  une étape de génération d'un référentiel prévoyant une pluralité d'opérations de contrôle par ultrasons de la pièce industrielle, le référentiel définissant pour chaque opération de contrôle par ultrasons un ensemble de paramètres de contrôle ;

-  une étape d'établissement d'un programme de contrôle par ultrasons de la pièce industrielle définissant pour chaque opération de contrôle par ultrasons un ensemble de paramètres opératoires ;

-  une étape de contrôle par ultrasons de la pièce industrielle selon ledit programme de contrôle par ultrasons, avec enregistrement de données caractérisant les contrôles par ultrasons effectivement mis en œuvre pour chaque opération de contrôle par ultrasons ;

-  une étape de vérification de la conformité du contrôle par ultrasons de la pièce industrielle avec :

    * une sous-étape de vérification de la conformité du programme de contrôle par ultrasons vis-à-vis du référentiel, comprenant, pour chaque opération de contrôle par ultrasons du programme de contrôle par ultrasons, une vérification qu'une pluralité de critères sont respectés en utilisant les paramètres de contrôle et les paramètres opératoires ;
    * une sous-étape de vérification de la conformité du contrôle par ultrasons vis-à-vis du référentiel, comprenant, pour chaque opération de contrôle par ultrasons, une extraction de paramètres effectifs à partir des données enregistrées, et une vérification qu'une pluralité de critères sont respectés en utilisant les paramètres de contrôle et les paramètres effectifs.

Le référentiel rassemble les exigences à respecter. Ces exigences proviennent du cahier des charges fixé par le client. Ces exigences sont transcrites en critères numériques ou descriptifs, en prenant en compte le retour d'expérience pour le contrôle par ultrasons de pièces industrielles similaires.

L'étape de vérification permet de valider le procédé de contrôle à deux niveaux.

Il permet d'abord de valider que le programme de contrôle par ultrasons est conforme au référentiel. Il permet ensuite de valider que, lors de la mise en œuvre de ce programme, les opérations de contrôle par ultrasons ont été effectuées conformément au référentiel.

Ce double contrôle permet d'améliorer la fiabilité du procédé de contrôle par ultrasons.

Le procédé de contrôle peut en outre présenter une ou plusieurs des caractéristiques ci-dessous, considérées individuellement ou selon toutes les combinaisons techniquement possibles :

-  la sous-étape de vérification de la conformité de chaque opération de contrôle par ultrasons du programme de contrôle par ultrasons et/ou la sous-étape de vérification de la conformité du contrôle est effectuée automatiquement par un organe de calcul et génère au moins un fichier listant les critères qui ne sont pas respectés et des écarts par rapports auxdits critères ;

-  l'étape de vérification comprend une sous-étape d'analyse de l'au moins un fichier par un spécialiste, le spécialiste analysant les écarts par rapport auxdits critères à respecter et décidant en fonction des écarts si le contrôle par ultrasons est accepté ou non ;

-  au moins un des critères à vérifier à la sous-étape de vérification de la conformité du programme de contrôle par ultrasons est un critère numérique appliqué à une grandeur numérique, ladite sous-étape comprenant un calcul d'une première valeur caractérisant ladite grandeur numérique en utilisant au moins un paramètre opératoire, un calcul d'une seconde valeur caractérisant ladite grandeur numérique en utilisant au moins un paramètre de contrôle, et une comparaison de la première valeur et de la deuxième valeur ;

- l'ensemble de paramètres opératoires comprend au moins:

  * la surface d'entrée dans la pièce industrielle ;
  * des paramètres opératoires relatifs à la profondeur de contrôle dans la pièce industrielle;
  * la direction d'incidence des ultrasons par rapport à la surface d'entrée ;* des paramètres opératoires relatifs au traducteur ;
  * des paramètres opératoires relatifs au faisceau d'ultrasons généré par le traducteur ;
  * des paramètres opératoires caractérisant la trajectoire du traducteur sur la surface d'entrée ;

- la pièce industrielle est de révolution autour d'un axe de révolution, la trajectoire du traducteur sur la surface d'entrée comprenant plusieurs révolutions autour de l'axe de révolution, avec une révolution initiale, une révolution finale et éventuellement des révolutions intermédiaires régulièrement réparties entre la révolution initiale et la révolution finale, les paramètres opératoires caractérisant la trajectoire du traducteur sur la surface d'entrée comprenant un décalage circonférentiel autour de l'axe de révolution entre deux tirs d'ultrasons d'une même révolution et un décalage spatial entre deux révolutions ;
- les critères examinés pour la sous-étape de vérification de la conformité du programme de contrôle par ultrasons vis-à-vis du référentiel portent au moins sur les grandeurs numériques suivantes :

  * la profondeur contrôlée pour la révolution initiale ;
  * la profondeur contrôlée pour la révolution finale ;
  * une résolution au niveau de la surface d'entrée des ultrasons et éventuellement une résolution au niveau de la surface de sortie des ultrasons ;
  * un recouvrement circonférentiel entre deux tirs d'ultrasons voisins d'une même révolution ;
  * un recouvrement entre les tirs d'ultrasons appartenant à deux révolutions voisines ;
  * un seuil d'évaluation permettant de détecter des indications notables ;

- l'ensemble de paramètres de contrôle comprend au moins :

  * une surface d'entrée dans la pièce industrielle ;
  * des paramètres de contrôle relatifs à une profondeur de contrôle dans la pièce industrielle ;
  * une direction d'incidence des ultrasons par rapport à la surface d'entrée ;
  * des paramètres de contrôle caractérisant une trajectoire sur la surface d'entrée d'un traducteur générant les ultrasons ;

- au moins un des critères à vérifier à la sous-étape de vérification de la conformité du contrôle par ultrasons est un critère numérique appliqué à une grandeur numérique, ladite sous-étape comprenant un calcul d'une première valeur caractérisant ladite grandeur numérique en utilisant au moins un paramètre effectif, un calcul d'une seconde valeur caractérisant ladite grandeur numérique en utilisant au moins un paramètre de contrôle, et une comparaison de la première valeur et de la deuxième valeur ;
- les critères examinés pour la sous-étape de vérification de la conformité du contrôle vis-à-vis du référentiel portent au moins sur les grandeurs numériques suivantes :

  * la profondeur contrôlée ;
  * une résolution au niveau de la surface d'entrée des ultrasons et éventuellement une résolution au niveau de la surface de sortie des ultrasons;
  * un seuil d'évaluation permettant de détecter des indications notables ;
  * un gain appliqué à chaque opération de contrôle ;

- pour les grandeurs numériques suivantes :

  * la résolution au niveau de la surface d'entrée des ultrasons et éventuellement la résolution au niveau de la surface de sortie des ultrasons;
  * le seuil d'évaluation permettant la détection des indications notables ;
  la sous-étape de vérification de la conformité du contrôle par ultrasons vis-à-vis du référentiel comprend :

    * une vérification d'une valeur initiale de ladite grandeur numérique ;
    * une vérification si la grandeur numérique a été modifiée pendant l'opération de contrôle par ultrasons de sa valeur initiale à une nouvelle valeur ; et

* en cas de modification, une vérification si la nouvelle valeur est conforme au référentiel .

Selon un second aspect, l'invention porte sur un ensemble de contrôle par ultrasons d'une pièce industrielle, l'ensemble de contrôle comprenant :

- un référentiel comprenant prévoyant une pluralité d'opérations de contrôle par ultrasons de la pièce industrielle, le référentiel définissant pour chaque opération de contrôle par ultrasons un ensemble un ensemble de paramètres de contrôle comprenant au moins :

  * une surface d'entrée dans la pièce industrielle ;
  * des paramètres de contrôle relatifs à une profondeur de contrôle dans la pièce industrielle ;
  * une direction d'incidence des ultrasons par rapport à la surface d'entrée ;
  * des paramètres de contrôle caractérisant une trajectoire sur la surface d'entrée d'un traducteur générant les ultrasons ;

- un programme de contrôle par ultrasons de la pièce industrielle définissant pour chaque opération de contrôle par ultrasons un ensemble de paramètres opératoires comprenant au moins:

  * la surface d'entrée dans la pièce industrielle ;
  * des paramètres opératoires relatifs à la profondeur de contrôle dans la pièce industrielle ;
  * la direction d'incidence des ultrasons par rapport à la surface d'entrée ;
  * des paramètres opératoires relatifs au traducteur générant les ultrasons ;
  * des paramètres opératoires relatifs au faisceau d'ultrasons généré par le traducteur ;
  * des paramètres opératoires caractérisant la trajectoire du traducteur sur la surface d'entrée ;

- un dispositif de contrôle par ultrasons de la pièce industrielle selon ledit programme de contrôle par ultrasons, configuré pour enregistrer des données caractérisant les contrôles par ultrasons effectivement mis en œuvre pour chaque opération de contrôle par ultrasons ;
- un organe de calcul configuré pour effectuer une vérification de la conformité du contrôle par ultrasons de la pièce industrielle, ladite vérification comprenant:

  * une vérification de la conformité du programme de contrôle par ultrasons vis-à-vis du référentiel, comprenant, pour chaque opération de contrôle par ultrasons du programme de contrôle par ultrasons, une vérification qu'une pluralité de critères sont respectés en utilisant les paramètres de contrôle et les paramètres opératoires ;
  * une vérification de la conformité du contrôle par ultrasons vis-à-vis du référentiel, comprenant, pour chaque opération de contrôle par ultrasons, une extraction de paramètres effectifs à partir des données enregistrées, et une vérification qu'une pluralité de critères sont respectés en utilisant les paramètres de contrôle et les paramètres effectifs..

L'ensemble de contrôle peut en outre présenter une ou plusieurs des caractéristiques ci-dessous, considérées individuellement ou selon toutes les combinaisons techniquement possibles :

- au moins un des critères à vérifier dans le cadre de la vérification de la conformité du programme de contrôle par ultrasons est un critère numérique appliqué à une grandeur numérique, ladite vérification comprenant un calcul d'une première valeur caractérisant ladite grandeur numérique en utilisant au moins un paramètre opératoire, un calcul d'une seconde valeur caractérisant ladite grandeur numérique en utilisant au moins un paramètre de contrôle, et une comparaison de la première valeur et de la deuxième valeur ;
- l'ensemble de paramètres opératoires comprend au moins:

  * la surface d'entrée dans la pièce industrielle ;
  * des paramètres opératoires relatifs à la profondeur de contrôle dans la pièce industrielle ;
  * la direction d'incidence des ultrasons par rapport à la surface d'entrée ;
  * des paramètres opératoires relatifs au traducteur générant les ultrasons ;
  * des paramètres opératoires relatifs au faisceau d'ultrasons généré par le traducteur ;
  * des paramètres opératoires caractérisant la trajectoire du traducteur sur la surface d'entrée ;

    - la pièce industrielle est de révolution autour d'un axe de révolution, le dispositif de contrôle par ultrasons de la pièce industrielle étant configuré pour que la trajectoire du traducteur sur la surface d'entrée comprennent plusieurs révolutions autour de l'axe de révolution, avec une révolution initiale, une révolution finale et éventuellement des révolutions intermédiaires régulièrement réparties entre la révolution initiale et la révolution finale, les paramètres opératoires caractérisant la trajectoire du traducteur sur la surface d'entrée comprenant un décalage circonférentiel autour de l'axe entre deux tirs d'ultrasons d'une même révolution et un décalage spatial entre deux révolutions ;

- la vérification de la conformité du programme de contrôle par ultrasons vis-à-vis du référentiel porte au moins sur les grandeurs numériques suivantes :

  * la profondeur contrôlée pour la révolution initiale ;
  * la profondeur contrôlée pour la révolution finale ;
  * une résolution au niveau de la surface d'entrée des ultrasons et éventuellement une résolution au niveau de la surface de sortie des ultrasons;
  * un recouvrement circonférentiel entre deux tirs d'ultrasons voisins d'une même révolution ;
  * un recouvrement entre les tirs d'ultrasons appartenant à deux révolutions voisines ;
  * un seuil d'évaluation permettant de détecter des indications notables ;

- l'ensemble de paramètres de contrôle comprend au moins :

  * une surface d'entrée dans la pièce industrielle ;
  * des paramètres de contrôle relatifs à une profondeur de contrôle dans la pièce industrielle ;
  * une direction d'incidence des ultrasons par rapport à la surface d'entrée ;
  * des paramètres de contrôle caractérisant une trajectoire sur la surface d'entrée d'un traducteur générant les ultrasons ;

- au moins un des critères à vérifier dans le cadre de la vérification de la conformité du contrôle par ultrasons est un critère numérique appliqué à une grandeur numérique, ladite vérification comprenant un calcul d'une première valeur caractérisant ladite grandeur numérique en utilisant au moins un paramètre effectif, un calcul d'une seconde valeur caractérisant ladite grandeur numérique en utilisant au moins un paramètre de contrôle, et une comparaison de la première valeur et de la deuxième valeur.

- les critères examinés pour la vérification de la conformité du contrôle vis-à-vis du référentiel porte au moins sur les grandeurs numériques suivantes :

  * la profondeur contrôlée ;
  * une résolution au niveau de la surface d'entrée des ultrasons et éventuellement une résolution au niveau de la surface de sortie des ultrasons;
  * un seuil d'évaluation permettant de détecter des indications notables ;
  * un gain appliqué à chaque opération de contrôle.

D'autres caractéristiques et avantages de l'invention ressortiront de la description détaillée qui en est donnée ci-dessous, à titre indicatif et nullement limitatif, en référence aux figures annexées, parmi lesquelles :

- La figure 1 est un diagramme d'étapes illustrant le procédé de contrôle de l'invention ;
- La figure 2 est une vue en section axiale d'une pièce industrielle susceptible d'être contrôlée en utilisant le procédé de l'invention ;
- La figure 3 est une représentation schématique d'un B-scan superposé sur une partie de la section de la pièce industrielle de la figure 4, le B-scan représentant les échos de géométrie présents dans la section ;
- La figure 4 est une représentation schématique simplifiée d'un ensemble de contrôle par ultrasons adapté pour la mise en œuvre du procédé de la figure 1 ; et
- La figure 5 est une représentation schématique simplifiée d'un A-scan, c'est-à-dire de l'amplitude du signal ultrasonore renvoyé par la pièce en fonction du temps pendant une opération de contrôle par ultrasons.

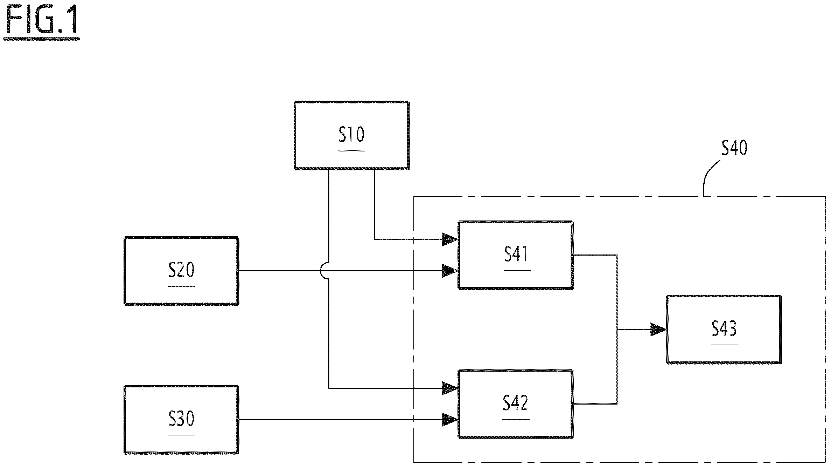

Le procédé dont les étapes sont représentées sur la figure 1 est prévu pour le contrôle par ultrasons d'une pièce industrielle.

Le contrôle est typiquement réalisé en immersion, la pièce industrielle, pendant le contrôle, étant immergée dans une cuve remplie d'un liquide. Ce liquide est typiquement de l'eau.

La pièce industrielle est typiquement une pièce métallique. La pièce est par exemple en acier, en titane ou en aluminium. Typiquement, la pièce est en un alliage à base Fe, Al, Ti, Ni, ou Co. En variante, la pièce est en un superalliage base Ni ou Co.

En variante, la pièce industrielle est une pièce composée d'un matériau composite, par exemple un composite à matrice métallique (CMM).

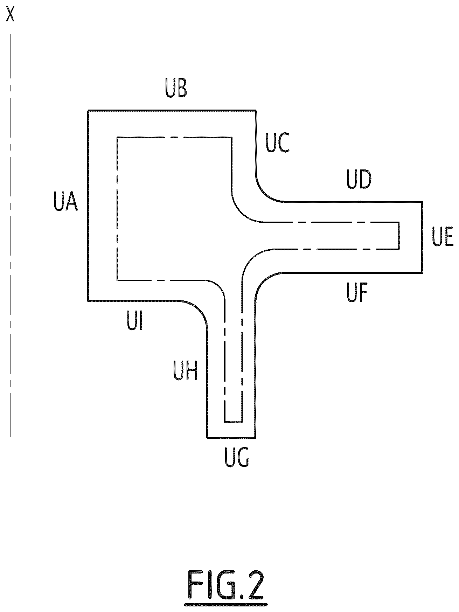

La pièce industrielle est typiquement une pièce de révolution autour d'un axe de révolution X matérialisé sur la figure 2.

La figure 2 montre une section de la pièce industrielle 10 à contrôler, dans un plan contenant l'axe de révolution X.

La pièce industrielle est typiquement destinée à être fabriquée en série, c'est-à-dire en un grand nombre d'exemplaires.

Le procédé est donc prévu pour contrôler des séries différentes de pièces industrielles toutes identiques.

La pièce est par exemple destinée à être intégrée dans un avion ou dans un moteur d'avion. En variante, elle est destinée à être intégrée dans un autre type d'équipement industriel.

La pièce industrielle 10 faisant l'objet du procédé de contrôle est typiquement une pièce pré-usinée. Elle est par exemple obtenue par matriçage d'un lingot de métal.

Elle est destinée dans ce cas à être usinée par le client final, de manière à former la pièce finie qui sera utilisée par ce client final.

Sur la figure 2, la pièce finie est représentée en traits interrompus à l'intérieur de la pièce industrielle 10 faisant l'objet du contrôle par ultrasons.

Le procédé de contrôle par ultrasons comprend :

- une étape S10 de génération d'un référentiel prévoyant une pluralité d'opérations de contrôle par ultrasons de la pièce industrielle 10 ;
- une étape S20 d'établissement d'un programme de contrôle par ultrasons de la pièce industrielle 10 ;
- une étape S30 de contrôle par ultrasons de la pièce industrielle 10 selon le programme de contrôle par ultrasons ;
- une étape S40 de vérification de la conformité du contrôle par ultrasons de la pièce industrielle 10.

Ces différentes étapes vont maintenant être détaillées.

A l'étape S10, le référentiel est généré sur la base des critères techniques de contrôle auxquels la pièce industrielle doit être soumise.

Le référentiel est issu d'un plan de contrôle de la pièce. Ce plan de contrôle est discuté avec le client final de la pièce et accepté par ce client.

Le référentiel est généré en prenant en compte la géométrie de la pièce, le matériau le constituant, le retour d'expérience concernant ce type de géométrie et de matériau, et le matériel envisagé pour effectuer les contrôles par ultrasons.

Le référentiel rassemble l'ensemble des critères devant être satisfaits pour que le contrôle par ultrasons puisse être validé comme étant conforme aux exigences de qualité.

Le respect des critères figurant dans le référentiel permet de valider que le contrôle est conforme, mais ne garantit en aucune manière que la pièce soit exempte de défaut.

Le référentiel est une base de données.

Le référentiel définit, pour chaque opération de contrôle par ultrasons, un ensemble de paramètre de contrôle.

L'ensemble de paramètres de contrôle comprend au moins :

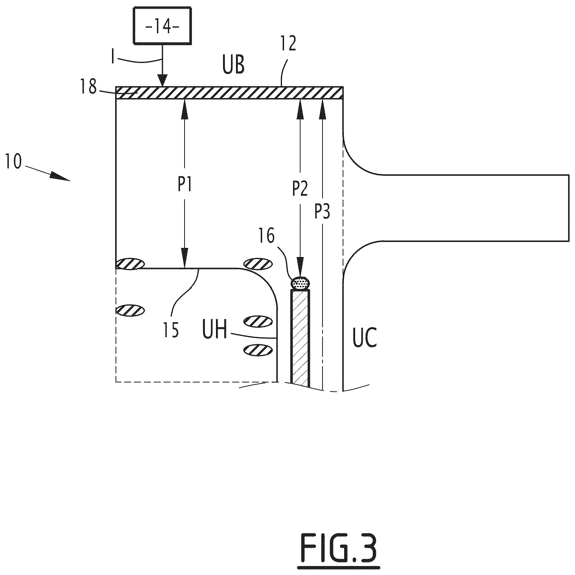

- une surface d'entrée 12 dans la pièce industrielle 10 ;
- des paramètres de contrôle relatifs à une profondeur de contrôle dans la pièce industrielle 10 ;
- une direction d'incidence I des ultrasons par rapport à la surface d'entrée 12 (figure 3) ;
- des paramètres de contrôle caractérisant la trajectoire sur la surface d'entrée 12 d'un traducteur 14 générant les ultrasons (figure 3).

La surface d'entrée 12 est la surface par laquelle le faisceau d'ultrasons incident, émis par le traducteur 14, pénètre dans la pièce industrielle.

Chaque surface d'entrée 12 est typiquement une surface de révolution autour de l'axe de révolution X.

Les différentes surfaces d'entrée 12 utilisées pour les opérations de contrôle par ultrasons de la pièce représentée sur la figure 2 sont référencées UA à UI.

Certaines surfaces d'entrée sont cylindriques et coaxiales à l'axe de révolution X. C'est notamment le cas pour les surfaces UA, UC, UE et UH dans l'exemple représenté.

D'autres surfaces d'entrée sont des anneaux centrés sur l'axe de révolution X. C'est notamment le cas pour les surfaces UB, UD, UF, UG et UI dans l'exemple représenté.

Encore d'autres surfaces peuvent être des surfaces tronconiques coaxiales à l'axe de révolution X.

Ces surfaces sont raccordées les unes aux autres par des jonctions arrondies ou anguleuses.

La trajectoire du traducteur 14 sur la surface d'entrée 12 comprend plusieurs révolutions autour de l'axe de révolution X.

Pour des surfaces en anneau, les révolutions sont par exemple des cercles concentriques. En variante, ce sont des spires d'une spirale.

Pour une surface cylindrique, les révolutions sont des cercles décalés axialement les uns par rapport aux autres. En variante, ce sont les spires d'une hélice.

Pour une surface tronconique, les révolutions sont des cercles de diamètres croissants ou décroissants, décalés axialement les uns par rapport aux autres. En variante, ce sont les spires d'une hélice de diamètres croissants ou décroissants, s'inscrivant dans la surface tronconique.

Il est à noter que toutes les surfaces extérieures de la pièce industrielle 10 ne sont pas nécessairement utilisées comme surface d'entrée 12 pour une des opérations de contrôle par ultrasons. En revanche, une même surface d'entrée 12 peut être utilisée plusieurs fois, pour différentes opérations de contrôle effectuées dans des conditions différentes, de manière à fournir des informations différentes.

La trajectoire du traducteur sur la surface d'entrée comprend une révolution initiale, une révolution finale, et éventuellement des révolutions intermédiaires régulièrement réparties entre la révolution initiale et la révolution finale.

Les paramètres de contrôle caractérisant la trajectoire du traducteur 14 sur la surface d'entrée 12 comprennent en particulier les paramètres ci-dessous :

- décalage circonférentiel autour de l'axe de révolution X entre deux tirs d'ultrason d'une même révolution ;
- décalage spatial entre deux révolutions, radialement et/ou axialement.

Les paramètres de contrôle caractérisant la trajectoire du traducteur 14 sur la surface d'entrée 12 comprennent encore de préférence :

- la position axiale de la première extrémité de la surface d'entrée 12 ;
- la position axiale de la seconde extrémité de la surface d'entrée 12, à l'opposée à la première extrémité de la surface d'entrée.

La direction d'incidence I des ultrasons par rapport à la surface d'entrée 12 correspond à l'angle entre la normale à la surface d'entrée et la direction de propagation du faisceau d'ultrasons incident émis par le traducteur 14. La direction d'incidence est typiquement perpendiculaire à la surface d'entrée (angle d'incidence de 0°). En variante, la direction d'incidence est inclinée par rapport à la surface d'entrée (angle d'incidence de 1,6° ou 2,4°, ou 3,6°, ou 4,8°, etc.).

La profondeur de contrôle est la profondeur de la pièce qui doit être contrôlée sous la surface d'entrée. Cette profondeur correspond typiquement à toute l'épaisseur de la pièce prise entre la surface d'entrée 12 et la surface de sortie 15 (profondeur P1 sur la figure 3). La surface de sortie 15 est la zone de la surface externe de la pièce atteinte par le faisceau d'ultrasons après avoir traversé la pièce sur toute son épaisseur. Les ultrasons sont essentiellement réfléchis sur la surface de sortie. Dans certains cas, elle correspond à la profondeur entre la surface d'entrée 12 et un écho de géométrie 16 généré par la réflexion du faisceau d'ultrasons incident (profondeur P2 sur la figure 3). Quand la pièce est de grande épaisseur à partir de la surface d'entrée, la profondeur de contrôle correspond à la profondeur maximum contrôlable compte tenu des caractéristiques du faisceau d'ultrasons (intensité, polarisation, fréquence, etc) et du matériau de la pièce (profondeur P3 sur la figure 3).

Les paramètres de contrôle relatifs à la profondeur de contrôle dans la pièce industrielle comprennent typiquement la profondeur de contrôle pour la révolution initiale, la profondeur de contrôle pour la révolution finale et une indication sur l'évolution de la profondeur de contrôle entre la révolution initiale et la révolution finale.

Cette indication est typiquement choisie entre les valeurs suivantes :

- pas d'évolution (les profondeurs de contrôle sont constantes pour toutes les révolutions) ;
- évolution linéaire (la profondeur de contrôle est incrémentée de manière régulière entre la première révolution et la dernière révolution) ;
- évolution par palier, qui correspond à plusieurs évolutions linéaires successives.

La profondeur de contrôle est exprimée en parcours sonore (longueur de parcours des ondes ultrasonores) ou en profondeur perpendiculairement à la surface d'entrée. Ces deux valeurs de profondeur ne sont pas identiques en particulier quand l'angle d'incidence est non nul.

Les paramètres de contrôle relatifs à la profondeur de contrôle dans la pièce industrielle comprennent de préférence encore la résolution entrante et la résolution sortante. La résolution entrante correspond à une épaisseur de la pièce industrielle qui ne peut pas être contrôlée sous la surface d'entrée 12. La résolution entrante dépend en particulier du matériau de la pièce contrôlée, de l'état de surface de la pièce et du traducteur utilisé.

L'épaisseur non contrôlable 18 représentée sur la figure 3 correspond à la résolution entrante.

La résolution sortante correspond à l'épaisseur qui ne peut pas être contrôlée immédiatement avant la surface de sortie des ultrasons. Quand la profondeur contrôlée est trop importante, le traducteur ne reçoit pas d'écho provenant de la surface de sortie, de telle sorte que la valeur renseignée pour la résolution sortante est nulle.

L'ensemble de paramètres de contrôle comporte de préférence un ou plusieurs des paramètres ci-dessous :

- fréquence des ultrasons émis par le traducteur 14, par exemple 10 MHz ou 20 MHz ;
- polarisation du faisceau d'ultrasons incident (onde longitudinale ou onde transversale) ;
- mise en œuvre ou pas d'un facteur de correction, et valeur du facteur de correction (le facteur de correction est appliqué quand la surface d'entrée est non plane) .

L'ensemble de paramètres de contrôle de préférence comporte les paramètres suivants :

- recouvrement entre deux tirs d'ultrason successifs appartenant à une même révolution ;
- recouvrement entre les tirs d'ultrason appartenant à deux révolutions successives.

Ces recouvrements sont exprimés en pourcentage de l'empreinte de chaque tir d'ultrason sur la surface d'entrée 12, c'est-à-dire au ratio de recouvrement entre les tirs.

En effet, le long d'une même révolution, le traducteur 14 émet des faisceaux d'ultrasons incidents à une fréquence déterminée, tout en se déplaçant. Les empreintes de ces faisceaux sur la surface d'entrée 12 doivent se recouvrir, pour que toute la surface d'entrée 12 soit balayée.

Le taux de recouvrement est un paramètre imposé. Il dépend de la taille de l'empreinte du faisceau ultrasonore incident sur la surface d'entrée 12, de la vitesse de déplacement du traducteur 14, et de la fréquence de tir du traducteur 14.

Il est à noter que le traducteur 14 se déplace à distance constante de la surface d'entrée 12.

De la même façon, le décalage axial entre deux révolutions est choisi de telle sorte qu'il y ait un recouvrement entre d'une part les empreintes formées par le faisceau d'ultrasons incident sur une révolution, et d'autre part les empreintes formées par le faisceau d'ultrasons incident sur la révolution suivante. Le recouvrement dépend de la taille de l'empreinte formée par le faisceau ultrasonore incident sur la surface d'entrée et du décalage spatial axial entre les deux révolutions.

L'ensemble de paramètres de contrôle comprend également un seuil d'évaluation, exprimé en pourcentage de la pleine échelle, en dessous duquel les échos ne sont pas considérés comme correspondants à une indication notable.

A l'étape S20, un programme de contrôle par ultrasons de la pièce industrielle 10 est établi. Ce programme définit pour chaque opération de contrôle par ultrasons un ensemble de paramètres opératoires.

L'ensemble de paramètres opératoires comprend au moins :

- la surface d'entrée 12 dans la pièce industrielle ;
- des paramètres opératoires relatifs à la profondeur de contrôle dans la pièce industrielle ;
- la direction d'incidence des ultrasons par rapport à la surface d'entrée 12 ;
- des paramètres opératoires relatifs au traducteur 14 générant les ultrasons ;
- des paramètres opératoires relatifs au faisceau d'ultrasons généré par le traducteur 14 ;
- des paramètres opératoires caractérisant la trajectoire du traducteur 14 sur la surface d'entrée 12.

La surface d'entrée et la direction d'incidence sont comme défini ci-dessus.

Les paramètres opératoires relatifs à la profondeur de contrôle dans la pièce industrielle sont typiquement les mêmes que les paramètres de contrôle relatifs à la profondeur de contrôle dans la pièce industrielle.

Les paramètres opératoires relatifs au traducteur 14 comprennent par exemple un ou plusieurs des paramètres ci-dessous :

- nombre d'éléments émetteur-récepteur du traducteur ;
- géométrie du traducteur : surface sphérique et rayon de courbure de la sphère, surface circulaire et rayon de la surface circulaire, surface rectangulaire, etc. ;
- fréquence des ultrasons émis ;
- hauteur d'eau entre le traducteur et la surface d'entrée ;
- fréquence de tirs des ultrasons, c'est-à-dire intervalle de temps séparant deux tirs d'ultrasons.

Les paramètres opératoires relatifs au faisceau d'ultrasons généré par le traducteur 14 comprennent par exemple un ou plusieurs des paramètres ci-dessous :

- type d'onde généré par le traducteur 14, choisi entre onde longitudinale et/ou onde transversal ;

- taille de l'empreinte du faisceau d'ultrasons incident sur la surface d'entrée.

Les paramètres opératoires caractérisant la trajectoire du traducteur 14 sur la surface d'entrée 12 comprennent par exemple tous les paramètres de contrôle relatifs la trajectoire du traducteur 14 sur la surface d'entrée 12 énoncés ci-dessus.

Les paramètres opératoires caractérisant la trajectoire du traducteur 14 sur la surface d'entrée 12 comprennent également la vitesse de déplacement du traducteur 14 par rapport à la surface d'entrée 12.

L'ensemble de paramètres opératoires comprend également un seuil d'évaluation. Ce seuil d'évaluation est comme décrit ci-dessus pour l'ensemble de paramètres de contrôle.

Pendant l'étape S30 de contrôle par ultrasons de la pièce industrielle, des données caractérisant les contrôles par ultrasons effectivement mis en œuvre pour chaque opération de contrôle par ultrasons sont enregistrées.

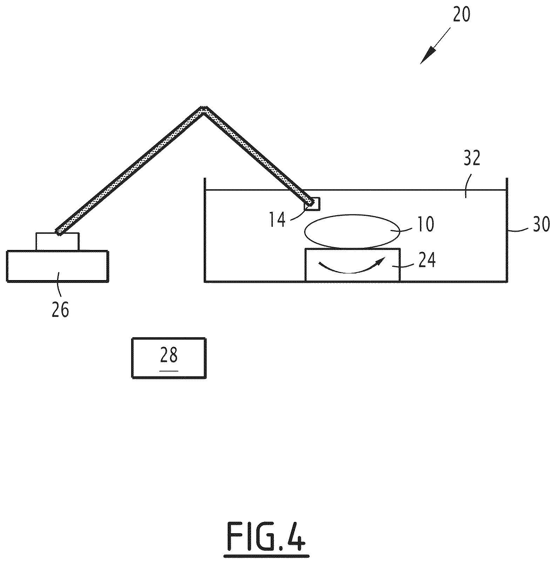

L'étape de contrôle par ultrasons est typiquement effectuée dans le dispositif de contrôle par ultrasons 20 représenté par la figure 4. Ce dispositif de contrôle par ultrasons 20 comprend :

- le traducteur 14 configuré pour émettre des ultrasons et pour détecter des échos des ultrasons renvoyés par la pièce industrielle 10 ;
- un support tournant 24 sur lequel est fixée la pièce industrielle 10 ;
- un manipulateur 26 déplaçant le traducteur 14 à une distance prédéterminée de la pièce industrielle 10 ;
- un organe de calcul 28 pilotant le traducteur 14, le support tournant 24 et le manipulateur 26, l'organe de calcul étant programmé pour mettre en œuvre le plan de contrôle par ultrasons.

La pièce industrielle 10 est immergée dans une cuve 30 remplie d'un milieu liquide 32. Typiquement, le support tournant 24 est lui aussi plongé dans le milieu liquide. Ce milieu liquide est typiquement de l'eau.

La pièce industrielle 10 est fixée sur le support tournant 24 de façon à ce que l'axe de révolution X coïncide avec l'axe de rotation du support tournant 24.

Le manipulateur 26 est par exemple un bras manipulateur.

Le manipulateur 26 présente un nombre de degrés de liberté adapté pour, en combinaison avec la rotation du support tournant 24, déplacer le traducteur 14 sur la surface d'entrée 12 selon la trajectoire prévue pour chaque opération de contrôle par ultrasons.

Le manipulateur 26 maintient le traducteur 14 à la distance prédéterminée de la surface d'entrée 12 prévue dans le plan de contrôle par ultrasons.

Les données enregistrées sont les échos renvoyés par la pièce industrielle 10, et des paramètres de fonctionnement du dispositif de contrôle 20.

Les échos renvoyés par la pièce industrielle 10 sont mesurés par le traducteur 14 et enregistrés par l'organe de calcul 28. Les paramètres de fonctionnement du dispositif de contrôle 20 sont enregistrés par l'organe de calcul 28.

Les paramètres de fonctionnement du dispositif de contrôle 20 correspondent à tous les paramètres de fonctionnement du traducteur 14, du manipulateur 26, et du support tournant 14.

Si la pièce industrielle n'est pas de révolution, un autre dispositif de contrôle par ultrasons peut être utilisé, par exemple sans plateau tournant.

En variante, la pièce industrielle n'est pas immergée dans un bain de liquide. Le contrôle peut être effectué avec la pièce à l'air.

L'étape S40 de vérification de la conformité du contrôle par ultrasons de la pièce industrielle comprend :

- une sous-étape S41 de vérification de la conformité du programme de contrôle par ultrasons vis-à-vis du référentiel ; et
- une sous-étape S42 de vérification de la conformité du contrôle par ultrasons vis-à-vis du référentiel.

La sous-étape S41 de vérification de la conformité du programme de contrôle par ultrasons vis-à-vis du référentiel comprend, pour chaque opération de contrôle par ultrasons du programme de contrôle par ultrasons, une vérification qu'une pluralité de critères est respectée, en utilisant les paramètres de contrôle et les paramètres opératoires.

La sous-étape S42 de vérification de la conformité du contrôle par ultrasons vis-à-vis du référentiel comprend, pour chaque opération de contrôle par ultrasons, une extraction de paramètres effectifs à partir des données enregistrées, et une vérification qu'une pluralité de critères sont respectés, en utilisant les paramètres de contrôle et les paramètres effectifs.

L'extraction des paramètres effectifs est effectuée automatiquement.

La sous-étape S41 de vérification de la conformité de chaque opération de contrôle par ultrasons du programme de contrôle par ultrasons et/ou la sous-étape S42 de vérification de la conformité du contrôle sont effectuées automatiquement par un organe de calcul et génèrent au moins un fichier listant les critères qui ne sont pas respectés et les écarts par rapport aux critères.

Typiquement, la sous-étape S41 et la sous-étape S42 sont effectuées automatiquement par l'organe de calcul. La liste des critères qui ne sont pas respectés et les écarts correspondants sont rassemblés dans un même fichier.

Par ailleurs, l'étape de vérification S40 comprend une sous-étape S43 d'analyse de l'au moins un fichier par un spécialiste.

Le spécialiste analyse les écarts par rapport aux critères à respecter et décide en fonction des écarts si le contrôle par ultrasons est accepté ou non.

Typiquement, il existe un programme de contrôle master qui est copié avant exécution. On enregistre le programme lors de son exécution et on vérifie le programme enregistré (tous les critères) par rapport au référentiel.

De préférence, au moins un des critères à vérifier à la sous-étape S41 de vérification de la conformité du programme de contrôle par ultrasons est un critère numérique appliqué à une grandeur numérique.

La sous-étape S41 comprend alors un calcul d'une première valeur caractérisant la grandeur numérique en utilisant au moins un paramètre opératoire, un calcul d'une seconde valeur caractérisant la grandeur numérique en utilisant au moins un paramètre de contrôle, et une comparaison de la première valeur et de la deuxième valeur.

Le critère numérique à vérifier est par exemple que l'écart entre la première valeur et la deuxième valeur est inférieur à un maximum prédéterminé. Ce critère est prédéterminé.

Les grandeurs numériques sont par exemple les suivantes :

- la profondeur contrôlée pour la révolution initiale ;
- la profondeur contrôlée pour la révolution finale ;
- la résolution au niveau de la surface d'entrée des ultrasons et éventuellement la résolution au niveau de la surface de sortie des ultrasons ;
- le recouvrement circonférentiel entre deux tirs d'ultrasons voisins d'une même révolution ;
- le recouvrement entre les tirs d'ultrasons appartenant à deux révolutions voisines ;
- le seuil d'évaluation permettant de détecter des indications notables.

La deuxième valeur est par exemple lue directement dans le référentiel, ou est calculée en utilisant les paramètres de contrôle figurant dans le référentiel.

La première valeur est lue directement dans le programme de contrôle par ultrasons pour l'opération de contrôle correspondante, ou est calculée en utilisant les paramètres opératoires figurant dans le programme de contrôle.

Par exemple, pour le recouvrement circonférentiel entre deux tirs d'ultrason voisins d'une même révolution, la deuxième valeur est lue directement dans le référentiel. La première valeur est calculée en utilisant les paramètres opératoires suivants :

- Fréquence de tir du traducteur ;
- Vitesse de déplacement circonférentielle de la surface d'entrée sous le traducteur ;
- Taille de l'empreinte du faisceau d'ultrasons au niveau de la surface d'entrée.

La grandeur numérique peut également être le facteur de correction.

La sous-étape S41 comporte alors un double contrôle :

- d'abord, au cas où le référentiel ne prévoit pas l'utilisation d'un facteur de correction pour l'opération de contrôle, la vérification que le programme de contrôle par ultrasons ne prévoit pas lui non plus de facteur de correction pour l'opération (case « facteur de correction » non cochée) ;
- au cas où le référentiel prévoit l'utilisation d'un facteur de correction pour l'opération de contrôle, la comparaison numérique entre le facteur de correction du référentiel et celui du programme de contrôle. Les valeurs du facteurs de correction sont lues directement dans le référentiel et dans le programme de contrôle.

De la même manière, au moins un des critères à vérifier à la sous-étape S42 de vérification de la conformité du contrôle par ultrasons est un critère numérique appliqué à une grandeur numérique. Ladite sous-étape comprend alors un calcul d'une première valeur caractérisant ladite grandeur numérique en utilisant au moins un paramètre effectif, un calcul d'une seconde valeur caractérisant ladite grandeur numérique en utilisant au moins un paramètre de contrôle, et une comparaison de la première valeur et de la deuxième valeur.

Le critère numérique à vérifier est par exemple que l'écart entre la première valeur et la deuxième valeur est inférieur à un maximum prédéterminé, figurant dans le référentiel.

Les grandeurs numériques sont par exemple les suivantes :

- la profondeur contrôlée pour chaque révolution ;

- la résolution au niveau de la surface d'entrée 12 des ultrasons et éventuellement la résolution au niveau de la surface de sortie 15 des ultrasons ;
- le seuil d'évaluation permettant de détecter des indications notables ;
- le gain appliqué à chaque opération de contrôle.

La première valeur correspond directement au paramètre effectif extrait des données enregistrées, ou est calculée à partir d'un ou plusieurs paramètres effectifs. Par exemple, pour la résolution d'entrée et de sortie, le seuil d'évaluation et le gain, la première valeur correspond directement à un paramètre effectif extrait des données.

La première valeur pour la profondeur contrôlée est calculée en utilisant les paramètres effectifs suivants : *Gate delay* (retard porte) et *Gate range* (étendue porte).

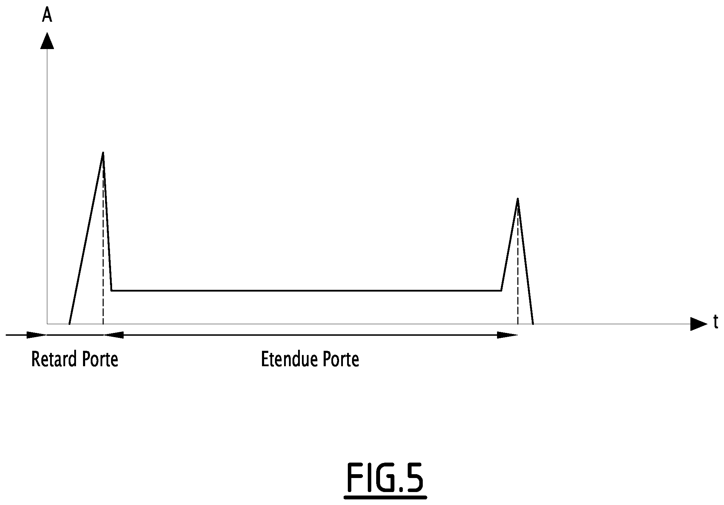

Ces paramètres sont illustrés sur la figure 5, qui représente l'amplitude du signal enregistré par le traducteur 14 en fonction du temps. L'origine de l'axe des temps correspond à l'émission du signal ultrasonore incident. Le paramètre *Gate delay* correspond à l'intervalle de temps entre l'émission du signal ultrasonore incident et la réception de l'écho provenant de la surface d'entrée. Ce paramètre correspond à la position du premier pic le long de l'axe des temps.

Le paramètre *Gate range* correspond à l'écart temporel entre les deux pics illustrés sur la figure 5. Le deuxième pic correspond à l'instant d'enregistrement par le traducteur 14 de l'écho renvoyé par la surface de sortie. La première valeur est calculée de la manière suivante :

$$V1 = \text{Gate delay} + \text{Gate range}$$

La deuxième valeur est lue directement dans le référentiel pour l'opération de contrôle correspondante, ou est calculée en utilisant les paramètres de contrôle figurant dans le référentiel.

Par exemple, pour la résolution d'entrée et de sortie, le seuil d'évaluation et le gain, la deuxième valeur est lue directement dans le référentiel

La deuxième valeur pour la profondeur contrôlée est calculée de la manière suivante :

$$V2 = \text{profondeur en parcours sonore} - \text{résolution sortante en parcours sonore.}$$

La profondeur en parcours sonore et résolution sortante en parcours sonore sont des paramètres figurant directement dans le référentiel.

Par exemple, pour le recouvrement circonférentiel entre deux tirs d'ultrason voisins d'une même révolution, la deuxième valeur est lue directement dans le référentiel. La première valeur est calculée en utilisant les paramètres effectifs suivants :

- Fréquence de tir du traducteur ;
- Vitesse de déplacement circonférentielle de la surface d'entrée sous le traducteur ;
- Taille de l'empreinte du faisceau d'ultrasons au niveau de la surface d'entrée

Avantageusement, la sous-étape S42 de vérification de la conformité du contrôle vis-à-vis du référentiel comprend également un contrôle si certains paramètres effectifs ont été modifiés pendant l'étape de contrôle par ultrasons. Si un paramètre effectif a été modifié, il est possible que cette modification ait été effectuée par un opérateur, et que cela ait conduit à faire sortir le paramètre effectif du champ acceptable défini dans le référentiel.

Cette vérification est effectuée en particulier pour les grandeurs numériques suivantes :

- la résolution au niveau de la surface d'entrée des ultrasons et éventuellement la résolution au niveau de la surface de sortie des ultrasons ;
- le seuil d'évaluation permettant la détection d'indications notables.

Pour ces grandeurs numériques, la sous-étape de vérification de la conformité du contrôle par ultrasons vis-à-vis du référentiel comprend :

- une vérification de la valeur initiale de la grandeur numérique ;
- une vérification si la grandeur numérique a été modifié pendant l'opération de contrôle par ultrasons de sa valeur initiale à sa nouvelle valeur ; et
- en cas de modification, une vérification si la nouvelle valeur est conforme au référentiel.

La vérification de la valeur initiale de la grandeur numérique et de la nouvelle valeur de la grandeur numérique est effectuée comme décrit ci-dessus.

Selon un second aspect, l'invention porte sur un ensemble de contrôle par ultrasons d'une pièce industrielle.

L'ensemble de contrôle est spécialement adapté pour mettre en œuvre le procédé de contrôle décrit ci-dessus. Inversement, le procédé de contrôle décrit ci-dessus est conçu pour être mis en œuvre par l'ensemble de contrôle qui va maintenant être détaillé.

L'ensemble de contrôle comprend :

- un référentiel prévoyant une pluralité d'opérations de contrôle par ultrasons de la pièce industrielle, le référentiel définissant pour chaque opération de contrôle par ultrasons un ensemble de paramètres de contrôle;
- un programme de contrôle par ultrasons de la pièce industrielle 10 définissant, pour chaque opération de contrôle par ultrasons, un ensemble de paramètres opératoires ;
- un dispositif 20 de contrôle par ultrasons de la pièce industrielle selon ledit programme de contrôle par ultrasons, configuré pour enregistrer des données caractérisant les contrôles par ultrasons effectivement mis en œuvre pour chaque opération de contrôle par ultrasons ;
- un organe de calcul 28 configuré pour effectuer une vérification de la conformité du contrôle par ultrasons de la pièce industrielle, ladite vérification comprenant :

  * une vérification de la conformité du programme de contrôle par ultrasons vis-à-vis du référentiel, comprenant, pour chaque opération de contrôle par ultrasons du programme de contrôle par ultrasons, une vérification qu'une pluralité de critères sont respectés en utilisant les paramètres de contrôle et les paramètres opératoires ;
  * une vérification de la conformité du contrôle par ultrasons vis-à-vis du référentiel, comprenant pour chaque opération de contrôle par ultrasons, une extraction de paramètres effectifs à partir des données enregistrées, et une vérification qu'une pluralité de critères sont respectés en utilisant les paramètres de contrôle et les paramètres effectifs.

Le référentiel est comme décrit ci-dessus.

L'ensemble de paramètres de contrôle est comme décrit ci-dessus.

Le programme de contrôle par ultrasons de la pièce industrielle est comme décrit ci-dessus.

L'ensemble de paramètres opératoires est comme décrit ci-dessus.

Le dispositif de contrôle par ultrasons 20 de la pièce industrielle est comme décrit ci-dessus. L'enregistrement des données est effectué par l'organe de calcul 28 du dispositif de contrôle par ultrasons.

L'organe de calcul configuré pour faire la vérification de la conformité du contrôle par ultrasons de la pièce industrielle est l'organe de calcul 28 du dispositif de contrôle par ultrasons 20 ou est un organe de calcul distinct de celui-ci.

L'organe de calcul 28 est configuré pour effectuer une vérification de la conformité du contrôle par ultrasons de la pièce industrielle selon le procédé décrit ci-dessus.

**Revendications**

1. Procédé de contrôle par ultrasons d'une pièce industrielle (10), le procédé comprenant :

   - une étape (S10) de génération d'un référentiel prévoyant une pluralité d'opérations de contrôle par ultrasons de la pièce industrielle (10), le référentiel définissant pour chaque opération de contrôle par ultrasons un ensemble de paramètres de contrôle;
   - une étape (S20) d'établissement d'un programme de contrôle par ultrasons de la pièce industrielle (10) définissant pour chaque opération de contrôle par ultrasons un ensemble de paramètres opératoires;
   - une étape (S30) de contrôle par ultrasons de la pièce industrielle (10) selon ledit programme de contrôle par ultrasons, avec enregistrement de données caractérisant les contrôles par ultrasons effectivement mis en œuvre pour chaque opération de contrôle par ultrasons ;
   - une étape (S40) de vérification de la conformité du contrôle par ultrasons de la pièce industrielle (10) avec :

     * une sous-étape (S41) de vérification de la conformité du programme de contrôle par ultrasons vis-à-vis du référentiel, comprenant, pour chaque opération de contrôle par ultrasons du programme de contrôle par ultrasons, une vérification qu'une pluralité de critères sont respectés en utilisant les paramètres de contrôle et les paramètres opératoires ;
     * une sous-étape (S42) de vérification de la conformité du contrôle par ultrasons vis-à-vis du référentiel, comprenant, pour chaque opération de contrôle par ultrasons, une extraction de paramètres effectifs à partir des données enregistrées, et une vérification qu'une pluralité de critères sont respectés en utilisant les paramètres de contrôle et les paramètres effectifs.

2. Procédé de contrôle selon la revendication 1, dans lequel la sous-étape (S41) de vérification de la conformité de chaque opération de contrôle par ultrasons du programme de contrôle par ultrasons et/ou la sous-étape (S42) de vérification de la conformité du contrôle est effectuée automatiquement par un organe de calcul et génère au moins un fichier listant les critères qui ne sont pas respectés et des écarts par rapports auxdits critères.

3. Procédé de contrôle selon la revendication 2, dans lequel l'étape de vérification comprend une sous-étape d'analyse de l'au moins un fichier par un spécialiste, le spécialiste analysant les écarts par rapport auxdits critères à respecter et décidant en fonction des écarts si le contrôle par ultrasons est accepté ou non.

4. Procédé de contrôle selon l'une quelconque des revendications précédentes, dans lequel au moins un des critères à vérifier à la sous-étape (S41) de vérification de la conformité du programme de contrôle par ultrasons est un critère numérique appliqué à une grandeur numérique, ladite sous-étape comprenant un calcul d'une première valeur caractérisant ladite grandeur numérique en utilisant au moins un paramètre opératoire, un calcul d'une seconde valeur caractérisant ladite grandeur numérique en utilisant au moins un paramètre de contrôle, et une comparaison de la première valeur et de la deuxième valeur.

5. Procédé de contrôle selon l'une quelconque des revendications précédentes, dans lequel l'ensemble de paramètres opératoires comprend au moins:

   * la surface d'entrée (12) dans la pièce industrielle (10) ;
   * des paramètres opératoires relatifs à la profondeur de contrôle dans la pièce industrielle (10) ;
   * la direction d'incidence des ultrasons par rapport à la surface d'entrée (12) ;
   * des paramètres opératoires relatifs au traducteur (14) ;
   * des paramètres opératoires relatifs au faisceau d'ultrasons généré par le traducteur (14) ;
   * des paramètres opératoires caractérisant la trajectoire du traducteur (14) sur la surface d'entrée (12).

6. Procédé de contrôle selon la revendication 5, dans lequel la pièce industrielle (10) est de révolution autour d'un axe de révolution (X), la trajectoire du traducteur (14) sur la surface d'entrée (12) comprenant plusieurs révolutions autour de l'axe de révolution (X), avec une révolution initiale, une révolution finale et éventuellement des révolutions intermédiaires régulièrement réparties entre la révolution initiale et la révolution finale, les paramètres opératoires caractérisant la trajectoire du traducteur (14) sur la surface d'entrée (12) comprenant un décalage circonférentiel autour de l'axe de révolution (X) entre deux tirs d'ultrasons d'une même révolution et un décalage spatial entre deux révolutions.

7. Procédé de contrôle selon la revendication 6 combiné à la revendication 4, dans lequel les critères examinés pour la sous-étape (S41) de vérification de la conformité du programme de contrôle par ultrasons vis-à-vis du référentiel portent au moins sur les grandeurs numériques suivantes :

   - la profondeur contrôlée pour la révolution initiale ;
   - la profondeur contrôlée pour la révolution finale ;
   - une résolution au niveau de la surface d'entrée (12) des ultrasons et éventuellement une résolution au niveau de la surface de sortie des ultrasons;
   - un recouvrement circonférentiel entre deux tirs d'ultrasons voisins d'une même révolution ;
   - un recouvrement entre les tirs d'ultrasons appartenant à deux révolutions voisines ;
   - un seuil d'évaluation permettant de détecter des indications notables.

8. Procédé de contrôle selon l'une quelconque des revendications précédentes, dans lequel l'ensemble de paramètres de contrôle comprend au moins :

   * une surface d'entrée (12) dans la pièce industrielle (10) ;
   * des paramètres de contrôle relatifs à une profondeur de contrôle dans la pièce industrielle (10) ;
   * une direction d'incidence des ultrasons par rapport à la surface d'entrée (12) ;
   * des paramètres de contrôle caractérisant une trajectoire sur la surface d'entrée (12) d'un traducteur (14) générant les ultrasons.

9. Procédé de contrôle selon l'une quelconque des revendications précédentes, dans lequel au moins un des critères à vérifier à la sous-étape (S42) de vérification de la conformité du contrôle par ultrasons est un critère numérique appliqué à une grandeur numérique, ladite sous-étape comprenant un calcul d'une première valeur caractérisant ladite grandeur numérique en utilisant au moins un paramètre effectif, un calcul d'une seconde valeur caractérisant ladite grandeur numérique en utilisant au moins un paramètre de contrôle, et une comparaison de la première valeur et de la deuxième valeur.

10. Procédé de contrôle selon la revendication 9, dans lequel les critères examinés pour la sous-étape (S42) de vérification de la conformité du contrôle vis-à-vis du référentiel portent au moins sur les grandeurs numériques suivantes :

- la profondeur contrôlée ;
- une résolution au niveau de la surface d'entrée (12) des ultrasons et éventuellement une résolution au niveau de la surface de sortie des ultrasons;
- un seuil d'évaluation permettant de détecter des indications notables ;
- un gain appliqué à chaque opération de contrôle.

11. Procédé de contrôle selon la revendication 10, dans lequel pour les grandeurs numériques suivantes :

- la résolution au niveau de la surface d'entrée (12) des ultrasons et éventuellement la résolution au niveau de la surface de sortie des ultrasons;
- le seuil d'évaluation permettant la détection des indications notables ;

la sous-étape de vérification de la conformité du contrôle par ultrasons vis-à-vis du référentiel comprend :

- une vérification d'une valeur initiale de ladite grandeur numérique ;
- une vérification si la grandeur numérique a été modifiée pendant l'opération de contrôle par ultrasons de sa valeur initiale à une nouvelle valeur ; et
- en cas de modification, une vérification si la nouvelle valeur est conforme au référentiel.

12. Ensemble de contrôle par ultrasons d'une pièce industrielle, l'ensemble de contrôle comprenant :

- un référentiel comprenant prévoyant une pluralité d'opérations de contrôle par ultrasons de la pièce industrielle (10), le référentiel définissant pour chaque opération de contrôle par ultrasons un ensemble un ensemble de paramètres de contrôle comprenant au moins :

* une surface d'entrée (12) dans la pièce industrielle (10) ;
* des paramètres de contrôle relatifs à une profondeur de contrôle dans la pièce industrielle (10) ;
* une direction d'incidence des ultrasons par rapport à la surface d'entrée (12) ;
* des paramètres de contrôle caractérisant une trajectoire sur la surface d'entrée (12) d'un traducteur (14) générant les ultrasons ;

- un programme de contrôle par ultrasons de la pièce industrielle (10) définissant pour chaque opération de contrôle par ultrasons un ensemble de paramètres opératoires comprenant au moins:

* la surface d'entrée (12) dans la pièce industrielle (10) ;
* des paramètres opératoires relatifs à la profondeur de contrôle dans la pièce industrielle (10) ;
* la direction d'incidence des ultrasons par rapport à la surface d'entrée (12) ;
* des paramètres opératoires relatifs au traducteur (14) générant les ultrasons ;
* des paramètres opératoires relatifs au faisceau d'ultrasons généré par le traducteur (14) ;
* des paramètres opératoires caractérisant la trajectoire du traducteur (14) sur la surface d'entrée (12) ;

- un dispositif (20) de contrôle par ultrasons de la pièce industrielle (10) selon ledit programme de contrôle par ultrasons, configuré pour enregistrer des données caractérisant les contrôles par ultrasons effectivement mis en œuvre pour chaque opération de contrôle par ultrasons ;
- un organe de calcul (28) configuré pour effectuer une vérification de la conformité du contrôle par ultrasons de la pièce industrielle (10), ladite vérification comprenant:

* une vérification de la conformité du programme de contrôle par ultrasons vis-à-vis du référentiel, comprenant, pour chaque opération de contrôle par ultrasons du programme de contrôle par ultrasons, une vérification qu'une pluralité de critères sont respectés en utilisant les paramètres de contrôle et les paramètres opératoires ;

\* une vérification de la conformité du contrôle par ultrasons vis-à-vis du référentiel, comprenant, pour chaque opération de contrôle par ultrasons, une extraction de paramètres effectifs à partir des données enregistrées, et une vérification qu'une pluralité de critères sont respectés en utilisant les paramètres de contrôle et les paramètres effectifs.

13. Ensemble de contrôle selon la revendication 12, dans lequel au moins un des critères à vérifier dans le cadre de la vérification de la conformité du programme de contrôle par ultrasons est un critère numérique appliqué à une grandeur numérique, ladite vérification comprenant un calcul d'une première valeur caractérisant ladite grandeur numérique en utilisant au moins un paramètre opératoire, un calcul d'une seconde valeur caractérisant ladite grandeur numérique en utilisant au moins un paramètre de contrôle, et une comparaison de la première valeur et de la deuxième valeur.

14. Ensemble de contrôle selon la revendication 12 ou 13, dans lequel l'ensemble de paramètres opératoires comprend au moins:

   \* la surface d'entrée (12) dans la pièce industrielle (10) ;
   \* des paramètres opératoires relatifs à la profondeur de contrôle dans la pièce industrielle (10) ;
   \* la direction d'incidence des ultrasons par rapport à la surface d'entrée (12) ;
   \* des paramètres opératoires relatifs au traducteur (14) générant les ultrasons ;
   \* des paramètres opératoires relatifs au faisceau d'ultrasons généré par le traducteur (14) ;
   \* des paramètres opératoires caractérisant la trajectoire du traducteur (14) sur la surface d'entrée (12).

15. Ensemble de contrôle selon la revendications 14, dans lequel la pièce industrielle (10) est de révolution autour d'un axe de révolution (X), le dispositif de contrôle par ultrasons (20) de la pièce industrielle (10) étant configuré pour que la trajectoire du traducteur (14) sur la surface d'entrée (12) comprennent plusieurs révolutions autour de l'axe de révolution (X), avec une révolution initiale, une révolution finale et éventuellement des révolutions intermédiaires régulièrement réparties entre la révolution initiale et la révolution finale, les paramètres opératoires caractérisant la trajectoire du traducteur (14) sur la surface d'entrée (12) comprenant un décalage circonférentiel autour de l'axe entre deux tirs d'ultrasons d'une même révolution et un décalage spatial entre deux révolutions.

16. Ensemble de contrôle selon la revendication 15 combiné à la revendication 13, dans lequel la vérification de la conformité du programme de contrôle par ultrasons vis-à-vis du référentiel porte au moins sur les grandeurs numériques suivantes :

   - la profondeur contrôlée pour la révolution initiale ;
   - la profondeur contrôlée pour la révolution finale ;
   - une résolution au niveau de la surface d'entrée des ultrasons et éventuellement une résolution au niveau de la surface de sortie des ultrasons;
   - un recouvrement circonférentiel entre deux tirs d'ultrasons voisins d'une même révolution ;
   - un recouvrement entre les tirs d'ultrasons appartenant à deux révolutions voisines ;
   - un seuil d'évaluation permettant de détecter des indications notables.

17. Ensemble de contrôle selon l'une quelconque des revendications 12 à 16, dans lequel l'ensemble de paramètres de contrôle comprend au moins :

   \* une surface d'entrée (12) dans la pièce industrielle (10) ;
   \* des paramètres de contrôle relatifs à une profondeur de contrôle dans la pièce industrielle (10) ;
   \* une direction d'incidence des ultrasons par rapport à la surface d'entrée (12) ;
   \* des paramètres de contrôle caractérisant une trajectoire sur la surface d'entrée (12) d'un traducteur (14) générant les ultrasons.

18. Ensemble de contrôle selon l'une quelconque des revendications 12 à 17, dans lequel au moins un des critères à vérifier dans le cadre de la vérification de la conformité du contrôle par ultrasons est un critère numérique appliqué à une grandeur numérique, ladite vérification comprenant un calcul d'une première valeur caractérisant ladite grandeur numérique en utilisant au moins un paramètre effectif, un calcul d'une seconde valeur caractérisant ladite grandeur numérique en utilisant au moins un paramètre de contrôle, et une comparaison de la première valeur et de la deuxième valeur.

19. Ensemble de contrôle selon revendication 18, dans lequel les critères examinés pour la vérification de la conformité du contrôle vis-à-vis du référentiel porte au moins sur les grandeurs numériques suivantes :

- la profondeur contrôlée ;
- une résolution au niveau de la surface d'entrée (12) des ultrasons et éventuellement une résolution au niveau de la surface de sortie des ultrasons;
- un seuil d'évaluation permettant de détecter des indications notables ;
- un gain appliqué à chaque opération de contrôle.

# FIG.1

EP 4 772 873 A2

X

UB

UC

UD

UA

UE

UF

UI

UH

UG

## FIG.2

-14-

I

18

UB

12

10

P1

P2

P3

16

15

UH

UC

FIG.3

FIG.4

Retard Porte            Etendue Porte

## FIG.5